# FASCICULE DE BREVET EUROPEEN

(11) **EP 1 535 550 B1**
(45) Date de publication et mention de la délivrance du brevet: **04.10.2006**
(21) Numéro de dépôt: 04356184.4
(22) Date de dépôt: 26.11.2004
(51) Int. Cl.: A47J 27/09, A47J 27/08

(54) **Appareil de cuisson sous pression comportant un moyen de sécurité à l'ouverture**
Druckgargerät mit Sicherheitsverriegelung des Deckels
Pressure cooker with safety cover interlocking

(30) Priorité: 27.11.2003 FR 0313939
(43) Date de publication de la demande: 01.06.2005
(73) Titulaire: SEB S.A., 69132 Ecully Cedex (FR)
(72) Inventeur: Seurat Guiochet, Claire Marie-Aurore, 21000 Dijon (FR); Chameroy, Eric, 21260 Veronnes (FR); Anota, Daniel Jean-Marie, 21000 Dijon (FR)
(74) Mandataire: Martin, Didier Roland Valéry

(56) Documents cités:
- EP-A- 1 342 440
- DE-A- 4 445 672
- FR-A- 2 816 491
- US-B1- 6 425 320

## Description

La présente invention se rapporte au domaine technique général des appareils domestiques de cuisson sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement un appareil domestique de cuisson d'aliments sous pression comprenant :
- une cuve et un couvercle destiné à être rapporté et verrouillé sur ladite cuve pour former une enceinte de cuisson étanche,
- un moyen de sécurité à l'ouverture susceptible d'évoluer entre une position neutre, dans laquelle il autorise le déverrouillage du couvercle, et une position de blocage, dans laquelle il interdit le déverrouillage du couvercle, ledit moyen de sécurité étant conçu pour se trouver en position de blocage lorsque la pression régnant dans l'enceinte est supérieure ou égale à une valeur prédéterminée dite pression de montée, et/ou lorsque la température régnant dans l'enceinte est supérieure ou égale à une valeur prédéterminée dite température de montée.

On connaît déjà des appareils de cuisson sous pression, du genre autocuiseurs, munis de moyens de sécurité à l'ouverture. De tels moyens de sécurité à l'ouverture sont bien connus en tant que tels. Ils permettent une sécurité positive à l'ouverture, en autorisant la désolidarisation du couvercle de l'appareil relativement à la cuve uniquement lorsque le niveau de pression régnant dans l'enceinte atteint un niveau acceptable du point de vue de la sécurité de l'utilisateur, c'est-à-dire un niveau de pression suffisamment faible pour éviter tout échappement brutal du couvercle, ou toute projection de matières de cuisson brûlantes.

Le document US-A-6425320 décrit un appareil de cuisson comprenant les caractéristiques techniques du préambule de la revendication 1.

Ces moyens de sécurité à l'ouverture connus sont généralement constitués par une tige manométrique sensible à la pression régnant dans l'enceinte de cuisson, et montée mobile entre une position basse, dans laquelle elle autorise le déverrouillage du couvercle, et une position haute, dans laquelle elle coopère avec le moyen de verrouillage / déverrouillage du couvercle de façon à empêcher le passage de la position de verrouillage à la position de déverrouillage.

Dans ces appareils connus, la tige manométrique monte et descend automatiquement uniquement en fonction de la pression régnant dans l'enceinte de cuisson. La tige manométrique de ces appareils de l'art antérieur présente de surcroît un compromis poids / dimension calculé pour favoriser une montée précoce de la tige dans sa position haute, par exemple dès que la pression à l'intérieur de l'autocuiseur atteint ou dépasse 0,5 kPa.

Une montée précoce est en effet recherchée pour monter en pression le plus rapidement possible, ce qui n'est pas possible tant que la tige manométrique se trouve en position basse, cette position n'étant en effet pas étanche.

Cependant, même lorsque la tige est théoriquement conformée et dimensionnée pour favoriser sa montée précoce en position haute, on constate en pratique qu'il est généralement nécessaire de soumettre l'appareil à une source de chauffe présentant une puissance importante pour obtenir effectivement une telle montée « *précoce* » de la tige.

Par ailleurs, si le compromis poids / dimension des tiges manométriques connues est choisi pour favoriser la montée précoce de la tige, ce même compromis défavorise la descente de la tige de sa position haute à sa position basse. En effet, on constate en pratique que du fait notamment de la masse très faible de la tige, choisie pour favoriser sa montée, la descente de la tige présente souvent un caractère aléatoire, et intervient en tous les cas à une pression généralement très inférieure à la pression qui a provoqué sa montée.

Cela a pour conséquence que l'utilisateur doit généralement attendre une durée relativement longue entre le moment où il a déclenché la décompression de l'appareil, et l'instant où il peut effectivement séparer le couvercle de la cuve, afin d'accéder aux aliments.

Cette durée relativement longue interdit d'ailleurs d'utiliser un autocuiseur comme une marmite classique, avec laquelle l'utilisateur peut très facilement et rapidement ouvrir et refermer à volonté le couvercle en cours de cuisson, pour contrôler directement les aliments, les assaisonner ou les goûter par exemple.

En définitive, les moyens de sécurité à l'ouverture équipant les appareils de cuisson connus ralentissent donc considérablement la durée globale du cycle de cuisson, en imposant des temps de latence en début et en fin de cuisson.

Les objets assignés à l'invention visent en conséquence à porter remède aux divers inconvénients énumérés précédemment, et à proposer un nouvel appareil domestique de cuisson d'aliments sous pression permettant une amélioration de la rapidité du cycle de cuisson, tout en étant d'un usage particulièrement sûr pour l'utilisateur.

Un autre objet de l'invention vise à proposer un nouvel appareil domestique de cuisson d'aliments sous pression de conception particulièrement simple et économique.

Un autre objet de l'invention vise à proposer un nouvel appareil domestique de cuisson d'aliments sous pression permettant une durée de cycle de cuisson optimisée.

Un autre objet de l'invention vise à proposer un nouvel appareil domestique de cuisson d'aliments sous pression qui présente un excellent compromis en terme de rapidité de cuisson, de facilité d'utilisation et de sécurité.

Les objets assignés à l'invention sont atteints à l'aide d'un appareil domestique de cuisson d'aliments sous pression comprenant :
- une cuve et un couvercle destiné à être rapporté et verrouillé sur ladite cuve pour former une enceinte de cuisson étanche,
- un moyen de sécurité à l'ouverture susceptible d'évoluer entre une position neutre, dans laquelle il autorise le déverrouillage du couvercle, et une position de blocage, dans laquelle il interdit le déverrouillage du couvercle, ledit moyen de sécurité étant conçu pour se trouver en position de blocage lorsque la pression régnant dans l'enceinte est supérieure ou égale à une valeur prédéterminée dite pression de montée, et/ou lorsque la température régnant dans l'enceinte est supérieure ou égale à une valeur prédéterminée dite température de montée,
caractérisé en ce que l'appareil comprend un moyen d'actionnement du moyen de sécurité, agencé pour permettre de placer le moyen de sécurité en position de blocage quel que soit le niveau de pression régnant dans l'enceinte de cuisson.

D'autres particularités et avantages de l'invention apparaîtront et ressortiront plus en détails à la lecture de la description faite ci-après, en référence aux dessins annexés, donnés à titre d'exemple illustratif et non limitatif dans lesquels :
- La figure 1 montre, selon une vue générale en perspective, un appareil domestique de cuisson conforme à l'invention.
- La figure 2 illustre, selon une vue en perspective, un détail de réalisation du moyen de verrouillage / déverrouillage du couvercle d'un appareil de cuisson conforme à l'invention.
- La figure 3 illustre, selon une vue en perspective, un détail de réalisation d'un appareil de cuisson conforme à l'invention.
- La figure 4 illustre, selon une autre vue en perspective, le détail de réalisation représenté à la figure 3.
- La figure 5 illustre, selon une vue en coupe transversale partielle, un détail de réalisation du moyen de sécurité à l'ouverture d'un appareil de cuisson conforme à l'invention, lorsque l'utilisateur vient de procéder au verrouillage étanche du couvercle relativement à la cuve.
- La figure 6 illustre, selon une vue de dessus, l'appareil de cuisson conforme à l'invention dont un détail est représenté à la figure 5.
- La figure 7 illustre, selon une vue partielle en coupe transversale, le détail de réalisation représenté à la figure 5, lorsque l'utilisateur procède à la décompression de l'appareil.
- La figure 8 illustre, selon une vue de dessus, l'appareil de cuisson conforme à l'invention dont un détail est représenté à la figure 7.
- La figure 9 illustre, selon une vue en coupe transversale partielle, le détail de réalisation représenté à la figure 7, lorsque la décompression est achevée.
- La figure 10 illustre, selon une vue de dessus, l'appareil de cuisson conforme à l'invention dont un détail est représenté à la figure 9.
- La figure 11 illustre, selon une vue partielle en coupe transversale, le détail de réalisation représenté à la figure 9, lorsque l'utilisateur procède au déverrouillage du couvercle.
- La figure 12 illustre, selon une vue de dessus, l'appareil de cuisson conforme à l'invention dont un détail est représenté à la figure 11.

L'appareil de cuisson conforme à l'invention est destiné à assurer la cuisson de différents aliments sous pression dans un contexte domestique.

De façon préférentielle, l'appareil de cuisson conforme à l'invention est un autocuiseur.

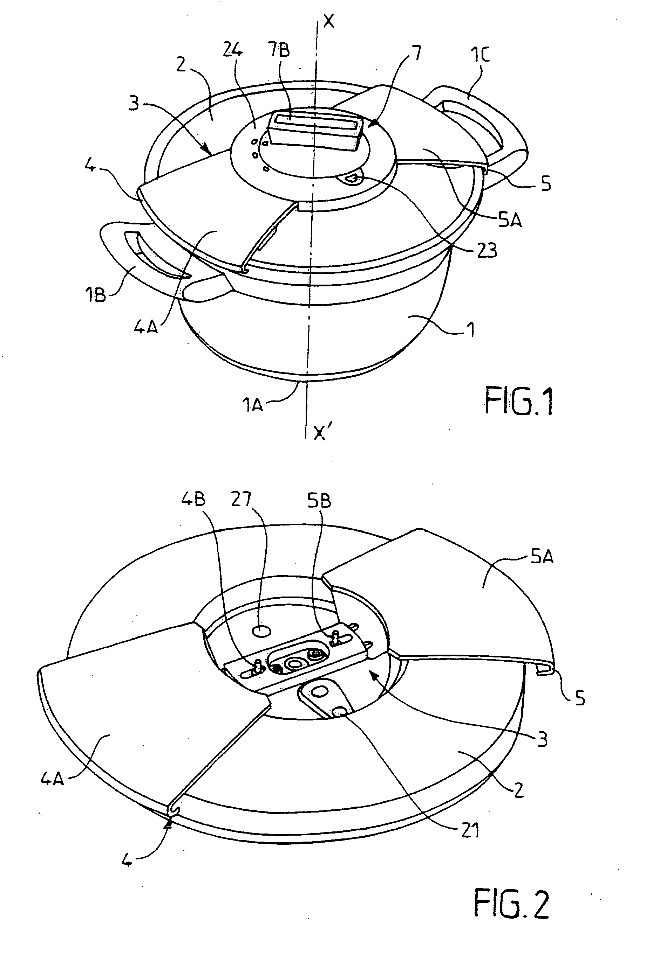

De façon classique, l'appareil de cuisson conforme à l'invention comprend une cuve 1 formant récipient de cuisson et présentant de façon préférentielle sensiblement une symétrie de révolution selon un axe X-X' (cf. figure 1).

Par la suite, l'adjectif « *axial »* se référera à la direction de cet axe de symétrie X-X', direction qui s'apparente à la direction verticale lorsque l'appareil est en fonctionnement normal.

La cuve 1 est de manière classique fabriquée à partir d'un matériau métallique tel que l'acier inoxydable, et est pourvue d'un fond thermo-conducteur 1 A solidarisé à la cuve par exemple par frappe à chaud.

La cuve 1 est de préférence de section circulaire, son diamètre d'ouverture pouvant par exemple être de l'ordre de 26 cm, ce qui correspond au standard en vigueur en matière de faitouts.

La cuve 1 peut comporter également des organes de préhension, telles que des poignées 1 B, 1 C, préférentiellement au nombre de deux, et fixés sur la cuve 1 de façon diamétralement opposée par exemple (cf. figure 1).

L'appareil conforme à l'invention comprend également un couvercle 2 destiné à être rapporté et verrouillé sur ladite cuve 1 pour former une enceinte de cuisson sensiblement étanche, c'est-à-dire suffisamment hermétique pour permettre une montée en pression de l'appareil.

Le couvercle 2 est avantageusement de forme générale discoïde, et peut être verrouillé ou déverrouillé sur la cuve 1 grâce à un moyen de verrouillage / déverrouillage 3 du couvercle 2 relativement à la cuve 1 (représenté en particulier à la figure 2).

Le moyen de verrouillage / déverrouillage 3 peut être de tout type connu de l'homme du métier, et est de façon classique susceptible d'évoluer entre une position de verrouillage du couvercle 2 relativement à la cuve 1, dans laquelle le couvercle est solidarisé à la cuve, et une position de déverrouillage du couvercle 2 relativement à la cuve 1, dans laquelle le couvercle peut être séparé de la cuve.

Le moyen de verrouillage / déverrouillage 3 peut être de tout type connu de l'homme du métier. Il est avantageusement constitué par un dispositif à mâchoires.

Le moyen de verrouillage / déverrouillage 3 n'est cependant pas limité à un système à mâchoires, et peut par exemple reposer sur tout autre principe de verrouillage connu, et par exemple un principe de verrouillage à baïonnettes, à segments, à étriers ou selon tout autre moyen bien connu de l'homme du métier, sans pour autant que l'on sorte du cadre de l'invention.

Avantageusement, le moyen de verrouillage / déverrouillage 3 de l'appareil conforme à l'invention comprend au moins un élément de verrouillage 4, 5 du couvercle 2 relativement à la cuve 1, ledit au moins un élément de verrouillage 4, 5 étant monté mobile sensiblement en translation radiale relativement au couvercle 2, par l'intermédiaire d'un moyen d'entraînement correspondant 4A, 5A, entre la position de verrouillage et la position de déverrouillage.

Avantageusement, ledit au moins un élément de verrouillage 4, 5 comprend une mâchoire destinée à enserrer les bords périphériques de cuve 2 et de couvercle 1.

Ladite mâchoire peut se présenter sous la forme d'une plaque métallique, profilée en U à son extrémité extérieure, tel que cela est bien connu de l'homme du métier.

De façon préférentielle, l'appareil conforme à l'invention comprendra deux éléments de verrouillage, constitués par des mâchoires 4, 5, lesdites mâchoires étant positionnées en vis-à-vis, de manière diamétralement opposée en regard de l'axe de symétrie général X-X' de l'appareil (cf. figures 1 et 2).

Avantageusement, le moyen d'entraînement 4A, 5A pour chaque mâchoire 4, 5 pourra consister en un bras entraîneur correspondant, lequel bras entraîneur peut par exemple venir de matière avec la mâchoire correspondante 4, 5, tel que cela est représenté aux figures 1 et 2.

Le moyen de verrouillage / déverrouillage 3 du couvercle 2 relativement à la cuve 1 n'est cependant pas limité à un système à mâchoires et peut par exemple reposer sur un principe de verrouillage à segments.

Avantageusement, l'appareil de cuisson domestique conforme à l'invention comprend un moyen de régulation de pression 6 monté en communication étanche avec un perçage 27 ménagé dans le couvercle 2, et agencé pour maintenir la pression relative (c'est-à-dire la pression mesurée au dessus de la pression atmosphérique) régnant dans l'enceinte à une valeur prédéterminée sensiblement constante, dite pression de fonctionnement.

Le principe de fonctionnement général d'un tel moyen de régulation 6 est bien connu de l'homme du métier.

Ainsi, de façon classique, le moyen de régulation de pression 6 comprend une soupape de régulation sensible à la pression régnant dans l'enceinte. Ladite soupape de régulation est montée mobile entre au moins :
- une position de butée et de rappel élastique, dite position d'étanchéité, dans laquelle elle ferme la communication de l'enceinte avec l'extérieur tant que la pression régnant dans l'enceinte est sensiblement inférieure ou égale à la pression de fonctionnement,
- et au moins une position de fuite, dans laquelle elle met en communication l'intérieur de l'enceinte avec l'extérieur dès que la pression à l'intérieur de l'enceinte dépasse la pression de fonctionnement. De façon classique, la soupape de régulation de pression peut présenter plusieurs positions de fuite, et parmi elles une position extrémale de fuite qui est une position de butée, la distance séparant la position de rappel élastique de la position extrémale de fuite constituant la course maximum de la soupape de régulation.

Une telle soupape de régulation de pression vise ainsi à obtenir un maintien de la pression au sein de l'enceinte aux alentours d'un niveau nominal prédéterminé lorsque l'appareil a quitté son régime transitoire de montée en pression, et a atteint son régime stationnaire de fonctionnement.

Le moyen de régulation de pression 6 pourra être classiquement constitué par une soupape à poids ou à ressort de compression, montée mobile dans un puits entre une position basse d'étanchéité et une ou plusieurs position(s) haute(s) de fuite.

Tel que cela est bien connu de l'homme du métier, le moyen de régulation de pression 6 peut également être pourvu d'un système de tarage permettant à l'utilisateur de sélectionner une valeur de pression de cuisson prédéterminée parmi un choix de plusieurs niveaux de pression de fonctionnement, via un organe de sélection de pression, en fonction par exemple de la nature des aliments présents dans l'appareil de cuisson.

Avantageusement, le moyen de régulation de pression 6 est conçu pour que la pression de fonctionnement soit comprise dans une plage s'étendant sensiblement entre 10 et 30 kPa, et soit de préférence sensiblement égale à 20 kPa.

Le demandeur a en effet établi que la sélection d'une pression de fonctionnement dans la plage 10-30 kPa permet un excellent compromis entre d'une part la durée de cuisson et d'autre part la durée de décompression de l'appareil lorsque l'on veut passer de la pression de fonctionnement à une pression moindre compatible avec une ouverture du couvercle dans des conditions acceptables de sécurité pour l'utilisateur.

L'invention n'est cependant pas limitée à un niveau de pression de fonctionnement particulier, et pourra être mise en oeuvre quel que soit le niveau de pression de fonctionnement.

Conformément à l'invention, l'appareil domestique de cuisson comprend également un moyen de décompression activable / désactivable, agencé pour autoriser, lorsqu'il est activé, une chute de la pression régnant dans l'enceinte en vue de pouvoir ouvrir ultérieurement le couvercle, c'est-à-dire faire passer le moyen de verrouillage / déverrouillage de sa position de verrouillage à sa position de déverrouillage.

A cette fin, le moyen de décompression est activable quel que soit le niveau de pression régnant dans l'enceinte, et en particulier est activable lorsque ce niveau de pression correspond à la pression de fonctionnement de l'appareil de cuisson conforme à l'invention.

Les fonctions du moyen de décompression sont donc notamment les suivantes :
- lorsque le moyen de décompression est désactivé, le moyen de décompression n'autorise sensiblement aucune fuite de vapeur de l'intérieur de l'enceinte vers l'extérieur ;
- lorsque le moyen de décompression est activé, il met en communication l'intérieur de l'enceinte avec l'extérieur, de façon à créer une fuite de vapeur engendrant une diminution de la pression régnant à l'intérieur de l'enceinte, ladite pression évoluant d'une première valeur correspondant à la pression de fonctionnement à une deuxième valeur moins élevée, compatible avec le déverrouillage du couvercle dans des conditions de sécurité acceptables pour l'utilisateur.

Le moyen de décompression pourra consister en tout moyen classique connu de l'homme du métier.

Le moyen de décompression sera en particulier conformé et dimensionné de manière à permettre une décompression sans projection dangereuse de matières de cuisson (aliments, liquides de cuisson) brûlantes vers l'extérieur).

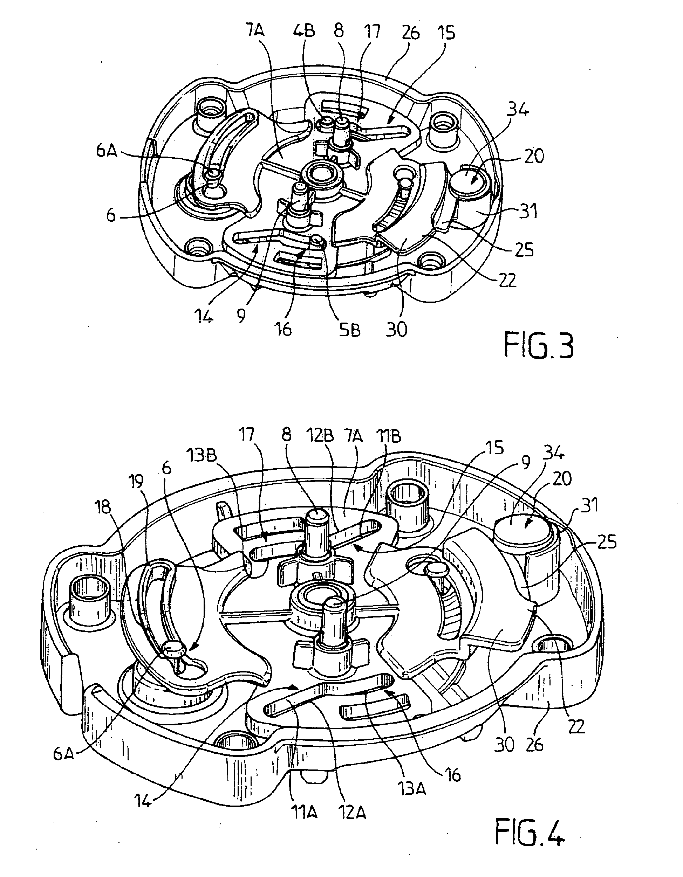

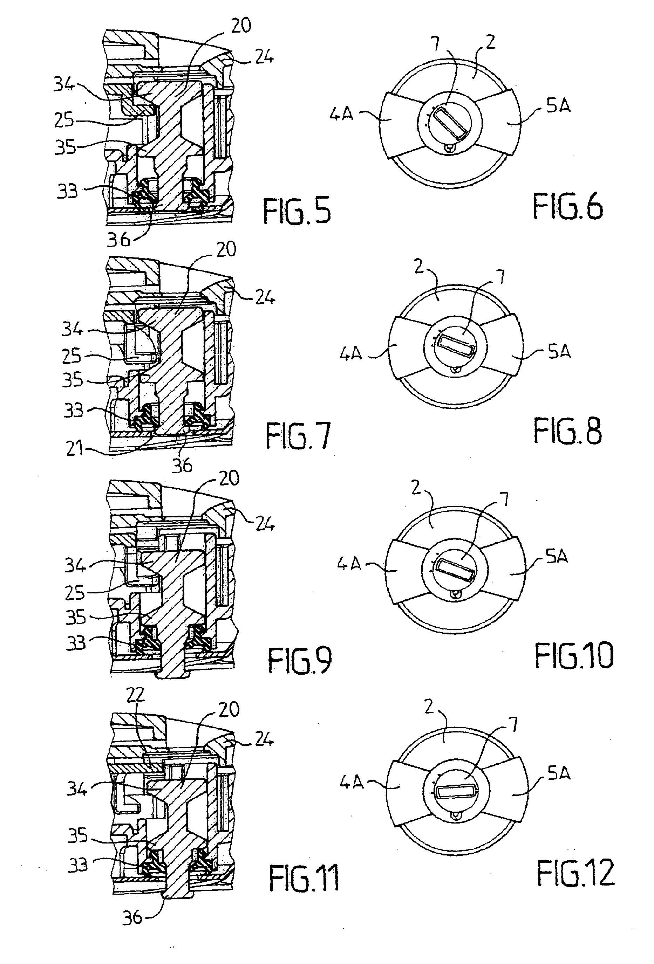

Conformément à l'invention, l'appareil domestique de cuisson comprend un moyen de sécurité à l'ouverture 20 susceptible d'évoluer entre une position neutre (représentée aux figures 9 et 11), dans laquelle il autorise le déverrouillage du couvercle 2 relativement à la cuve 1, et une position de blocage (représentée aux figures 3 à 5 et 7), dans laquelle il interdit le déverrouillage du couvercle 2 relativement à la cuve 1, ledit moyen étant conçu pour se trouver en position de blocage lorsque la pression régnant dans l'enceinte est supérieure ou égale à une valeur prédéterminée dite pression de montée, et/ou lorsque la température régnant dans l'enceinte est supérieure ou égale à une valeur prédéterminée dite température de montée.

Un tel moyen de sécurité à l'ouverture est bien connu dans son principe général. Il permet une sécurité positive à l'ouverture, en autorisant la désolidarisation du couvercle 2 relativement à la cuve 1 uniquement lorsque le niveau de pression régnant dans l'enceinte atteint un niveau acceptable du point de vue de la sécurité de l'utilisateur, et/ou lorsque le niveau de température régnant dans l'enceinte atteint un niveau acceptable du point de vue de la sécurité de l'utilisateur.

De façon préférentielle, le moyen de sécurité à l'ouverture 20 est sensible à la pression régnant dans l'enceinte, étant entendu que, de façon alternative ou cumulative, le moyen de sécurité à l'ouverture pourrait également être sensible à un autre paramètre physique pouvant être relié à la sécurité de l'utilisateur, comme par exemple la température.

Le moyen de sécurité comprend ainsi avantageusement une tige manométrique 20 montée mobile en regard d'un perçage 21 ménagé dans le couvercle 2, entre une position basse de rappel (sous l'effet par exemple de son propre poids) formant position neutre et une position haute qu'elle atteint automatiquement lorsque la pression dans l'enceinte atteint la pression de montée, ladite position haute formant position de blocage.

Avantageusement, le moyen de sécurité 20 est conçu pour interagir avec le moyen de verrouillage / déverrouillage 3, de façon à interdire le passage du moyen de verrouillage / déverrouillage 3 de sa position de verrouillage à sa position de déverrouillage lorsque ledit moyen de sécurité 20 est en position de blocage.

La coopération entre le moyen de sécurité 20 et le moyen de verrouillage / déverrouillage 3 peut être directe, c'est-à-dire que le moyen de sécurité 20 agit directement sur l'une ou plusieurs des pièces formant le moyen de verrouillage / déverrouillage 3 pour en bloquer le mouvement.

Cette coopération peut être également indirecte, le moyen de sécurité 20 agissant sur le moyen de verrouillage via une pièce intermédiaire d'interface, ce qui est le cas de la variante de réalisation représentée aux figures.

A titre d'exemple, on peut prévoir ainsi que le moyen de sécurité 20 vient bloquer le mouvement de translation radiale des bras entraîneurs 4A, 5A lorsqu'il est en position de blocage.

Selon une caractéristique importante de l'appareil de cuisson conforme à l'invention, ledit appareil comprend un moyen d'actionnement 25 du moyen de sécurité 20, ledit moyen d'actionnement 25 présentant de préférence un caractère activable / désactivable, et étant agencé pour permettre, lorsqu'il est activé, de placer le moyen de sécurité 20 en position de blocage quel que soit le niveau de pression régnant dans l'enceinte de cuisson, et en particulier même lorsque le niveau de pression régnant dans l'enceinte de cuisson est inférieur à la pression de montée.

Grâce à cette disposition, il est possible, au lieu d'attendre comme dans l'art antérieur que la pression, en augmentant au sein de l'enceinte, provoque le passage du moyen de sécurité 20 en position de blocage, de commander positivement le passage du moyen de sécurité 20 de sa position neutre à sa position de blocage même lorsque la pression à l'intérieur de l'enceinte est très faible, ce qui est le cas par exemple en début de cuisson.

Le moyen d'actionnement 20 permet ainsi de gagner du temps lors du cycle de cuisson, puisqu'au lieu d'attendre que le moyen de sécurité à l'ouverture 20 aille de lui-même en position de blocage sous l'effet de la mise en pression, l'utilisateur est en mesure, en activant directement ou indirectement, de façon manuelle ou non, le moyen d'actionnement, de placer le moyen de sécurité 20 en position de blocage.

Le mode d'action du moyen d'actionnement 25 sur le moyen de sécurité 20 peut être de toute nature, et notamment mécanique, magnétique ou chimique.

De façon préférentielle, le moyen d'actionnement 25 est agencé pour coopérer par contact mécanique avec le moyen de sécurité 20.

En d'autres termes, le moyen d'actionnement, lorsqu'il est activé, entre en contact direct ou indirect avec le moyen de sécurité 20, de façon à lui imprimer une force de déplacement tendant à faire évoluer le moyen de sécurité 20 jusqu'à sa position de blocage. Le moyen d'actionnement entraîne ainsi mécaniquement le moyen de sécurité 20.

De façon préférentielle, le moyen d'actionnement 25 présente un caractère non réciproque, c'est-à-dire que sa désactivation ne permet pas de façon systématique de placer le moyen de sécurité en position neutre.

En particulier, si entre le moment où le moyen d'actionnement a été activé pour placer le moyen de sécurité en position de blocage et le moment où le moyen d'actionnement a été désactivé, la pression régnant dans l'enceinte a atteint ou dépassé la pression de montée, le désactivation du moyen d'actionnement ne conduira pas au retour en position neutre du moyen de sécurité 20, ce dernier étant maintenu en position de blocage sous l'effet de la pression.

Le retour en position neutre ne se produira que si le niveau de pression est resté inférieur à la pression de montée.

Avantageusement, le moyen de sécurité à l'ouverture 20 est conçu pour que la pression de montée soit comprise entre sensiblement 1,5 et 4 kPa.

De façon encore plus préférentielle, le moyen de sécurité 20 est conçu pour que la pression de montée soit sensiblement égale à 3 kPa ± 0,5 kPa.

De façon encore plus avantageuse, la pression de montée est sensiblement égale à 3,3 kPa.

Avantageusement, le moyen de sécurité à l'ouverture 20 est conçu pour descendre vers sa position neutre lorsque la pression à l'intérieur de l'enceinte atteint une valeur relative, dite pression de descente, comprise entre sensiblement 1,5 et 4 kPa. Ladite pression de descente est par ailleurs généralement sensiblement inférieure à la pression de montée.

De façon préférentielle, la pression de descente est sensiblement égale à 2,5 kPA ± 0,5 kPa.

De manière générale, on cherchera dans le cadre de l'invention à dimensionner et conformer le moyen de sécurité 20 de façon à ce que la pression de descente, même si elle reste généralement inférieure à la pression de montée, soit la plus proche possible de la pression de montée.

Le moyen de sécurité à l'ouverture 20 sera également conçu pour que sa pression de descente soit la plus élevée possible dans la limite des normes en vigueur.

Le choix d'une pression de descente élevée, telle que 2,5 kPa, permet de pouvoir ouvrir plus rapidement, et avec plus de précision dans le temps, le couvercle 2, en comparaison notamment avec les autocuiseurs de l'art antérieur, dont la pression de descente n'excède pas en général 0,5 kPa.

L'obtention d'un tel niveau de pression de descente va cependant généralement de pair avec un alourdissement du moyen de sécurité 20, alourdissement qui est cependant dommageable à la rapidité de montée du moyen de sécurité 20 dans sa position de blocage, au début du cycle de cuisson.

A titre d'exemple, la masse du moyen de sécurité peut être comprise entre 4 et 20 g, et de préférence entre 5 et 9 g.

De façon encore plus préférentielle, la masse du moyen de sécurité est égale à 7,8 g.

L'invention permet toutefois de s'affranchir de ce problème, grâce au moyen d'actionnement 25 qui permet de propulser de façon positive le moyen de sécurité 20 en position de blocage, même si le niveau de pression régnant dans l'enceinte est inférieur à la pression de montée.

Avantageusement, les moyens d'actionnement 25, de verrouillage / déverrouillage 3 et de décompression 6 coopèrent directement ou indirectement de façon à ce que lorsque le moyen de verrouillage / déverrouillage 3 est en position de verrouillage, le passage du moyen de décompression de sa position activée à sa position désactivée entraîne le moyen de sécurité 20 dans sa position de blocage.

Avantageusement, lesdits moyens d'actionnement 25, de verrouillage / déverrouillage 3 et de décompression 6 coopèrent de façon à ce que lorsque le moyen de verrouillage / déverrouillage 3 est en position de verrouillage et que le moyen de décompression 6 est activé, le moyen d'actionnement autorise le moyen de sécurité 20 à évoluer vers sa position neutre, du moins si la pression à l'intérieur de l'enceinte le permet (cf. figures 7 et 8).

De façon préférentielle, le moyen de sécurité 20 ferme de façon sensiblement étanche la communication de l'enceinte avec l'extérieur lorsqu'il est en position neutre.

Avantageusement, le moyen de sécurité 20 ferme également de façon sensiblement étanche la communication de l'enceinte avec l'extérieur lorsqu'il est en position de blocage.

Il est par ailleurs envisageable que le moyen de sécurité, lorsqu'il est en train de passer de l'une à l'autre de ses positions neutre et de blocage, ouvre, même de façon minime, la communication de l'enceinte avec l'extérieur. En d'autres termes, l'étanchéité au niveau du moyen de sécurité 20 n'est pas garantie lorsque ledit moyen est en cours de passage entre ces deux positions de butée, à savoir la position neutre et la position de blocage.

On va maintenant décrire plus en détails la variante préférentielle de réalisation représentée aux figures.

Dans cette variante, le moyen de verrouillage / déverrouillage 3 et le moyen de décompression sont chacun reliés fonctionnellement à un organe de commande 7 unique et commun, ledit organe 7 étant conçu pour être susceptible de se trouver dans une position prédéterminée de verrouillage et décompression, dans laquelle ledit organe de commande 7 coopère avec le moyen de verrouillage / déverrouillage 3 et le moyen de décompression de façon à ce que le moyen de verrouillage / déverrouillage 3 se trouve dans sa position de verrouillage, tandis que le moyen de décompression est activé.

En d'autres termes, les moyens de verrouillage / déverrouillage, de décompression et l'organe de commande unique 7 sont agencés pour coopérer de façon à ce que l'utilisateur puisse, en manipulant l'organe de commande unique 7, commander l'activation de la décompression tout en conservant un verrouillage complet de l'appareil.

Avantageusement, l'organe de commande unique 7 est conçu pour être également susceptible de se trouver dans une position, de préférence prédéterminée, de déverrouillage et décompression, dans laquelle ledit organe de commande 7 coopère avec le moyen de verrouillage / déverrouillage 3 et le moyen de décompression de façon à ce que le moyen de verrouillage / déverrouillage se trouve dans sa position de déverrouillage, tandis que le moyen de décompression est activé.

Cette position de déverrouillage et décompression permet la séparation totale de la cuve 1 et du couvercle 2.

Avantageusement, l'organe de commande unique 7 est également conçu pour être susceptible de se trouver dans une position, de préférence prédéterminée, de verrouillage sensiblement étanche, dans laquelle ledit organe de commande 7 coopère avec le moyen de verrouillage / déverrouillage 3 et le moyen de décompression de façon à ce que le moyen de verrouillage / déverrouillage 3 se trouve dans sa position de verrouillage, tandis que le moyen de décompression 6 est désactivé.

Cette position de verrouillage sensiblement étanche correspond à la configuration de l'appareil permettant la cuisson.

Ainsi, l'organe de commande 7 pourra avantageusement évoluer entre les trois positions prédéterminées suivantes :
- une position (a) de déverrouillage et décompression (représentée aux figures 11 et 12),
- une position (b) de verrouillage et décompression (représentée aux figures 7 à 10),
- une position (c) de verrouillage sensiblement étanche (représentée aux figures 5 et 6).

De manière préférentielle, l'organe de commande 7 présente un caractère séquentiel, c'est-à-dire qu'il est conçu pour n'autoriser que les séquences de changement de position suivantes :
- passage de la position (a) à la position (b),
- passage de la position (b) à la position (c),
- passage de la position (c) à la position (b),
- passage de la position (b) à la position (a).

En particulier, le passage direct de la position (c) à la position (a), sans phase de décompression sécurisée préalable (position b) sera proscrit.

Avantageusement, l'organe de commande 7 est monté en rotation relativement au couvercle, de préférence selon l'axe X-X'.

L'organe de commande 7 comprend de manière préférentielle une plaque intermédiaire rotative 7A dont le mouvement de rotation est contrôlé à l'aide d'un moyen de manoeuvre 7B actionnable manuellement par l'utilisateur, du genre poignée.

La poignée 7B est de préférence directement fixée à la plaque intermédiaire 7A, par l'intermédiaire de quilles de fixation 8, 9, de façon à réaliser un encastrement mécanique entre la poignée 7B et la plaque intermédiaire 7A, ce qui revient à interdire tout déplacement angulaire relatif entre la poignée 7B et la plaque 7A (entraînement direct).

Il est cependant tout à fait envisageable, sans pour autant sortir du cadre de l'invention, que soit prévue une interface mécanique (non représentée), par exemple de démultiplication ou de surmultiplication, entre la poignée 7B et la plaque intermédiaire 7A.

Tel que cela est représenté aux figures, la plaque rotative 7A peut avantageusement être montée dans un siège 26 destiné à être lui-même monté sur le couvercle 2. Le siège 26 est de plus destiné à coopérer avec un carter 24 supérieur, lequel vient coiffer périphériquement la plaque 7A (cf. figure 1).

L'association du carter 24 et du siège 26 forme ainsi un boîtier unitaire monobloc, renfermant la plaque intermédiaire 7A. Ce boîtier peut préférentiellement présenter un caractère amovible, c'est-à-dire qu'il peut être monté et démonté du couvercle 2 à volonté, en vue d'un passage du couvercle 2 au lave-vaisselle par exemple.

L'organe de commande 7 est relié fonctionnellement au moyen d'entraînement 4A, 5A correspondant à chaque mâchoire 4, 5, de façon à régir le déplacement dudit moyen d'entraînement 4A, 5A, lequel est avantageusement constitué, ainsi qu'on l'a vu précédemment, d'un bras entraîneur 4A, 5A venant de matière avec la mâchoire correspondante 4, 5.

De façon préférentielle, chaque bras entraîneur 4A, 5A présente d'une part une extrémité externe reliée à l'élément de verrouillage, à savoir par exemple la mâchoire 4, 5, et d'autre part une extrémité interne pourvue d'un ergot axial de guidage 4B, 5B destiné à coopérer fonctionnellement avec l'organe de commande 7.

Avantageusement, l'organe de commande 7, et plus précisément la plaque intermédiaire 7A, comprend au moins une rampe de déverrouillage 11A, 11B associée à chaque bras entraîneur 4A, 4B.

Ladite au moins une rampe de déverrouillage 11 A, 11B est agencée de façon à ce que lorsque l'organe de commande 7 tourne, sous l'action de l'utilisateur, de sa position de verrouillage et décompression à sa position de déverrouillage et décompression, la rampe de déverrouillage 11 A, 11B engage l'ergot axial 4B, 5B et le pousse vers l'extérieur de l'appareil, ce qui engendre la translation radiale du moyen d'entraînement 4A, 5A de la position de verrouillage du couvercle à la position de déverrouillage du couvercle.

Avantageusement, l'organe de commande 7 comprend également au moins une rampe de verrouillage 12A, 12B associée à chaque bras entraîneur 4A, 5A. Ladite au moins une rampe de verrouillage 12A, 12B est agencée de façon à ce que lorsque l'organe de commande 7 tourne, sous l'action de l'utilisateur, de sa position de déverrouillage et décompression à sa position de verrouillage et décompression, la rampe de verrouillage 12A, 12B engage l'ergot axial de guidage correspondant 4B, 5B et le pousse horizontalement vers l'intérieur de l'appareil, ce qui engendre la translation radiale du moyen d'entraînement correspondant 4A, 5A de la position de déverrouillage du couvercle à la position de verrouillage du couvercle.

Avantageusement, chaque ergot axial de guidage 4B, 5B est formé par un pion s'étendant sensiblement dans la direction axiale, tandis que les rampes de déverrouillage 11 A, 11B et de verrouillage 12A, 12B sont obtenues en ménageant un orifice oblong correspondant 14, 15 dans l'épaisseur de la plage 7A, selon une direction oblique par rapport à la direction radiale, ledit orifice oblong 14, 15 étant destiné à accueillir l'ergot axial de guidage correspondant 4B, 5B.

On comprend ainsi que l'organe de commande 7 permet de commander de façon positive et réversible le passage du moyen de verrouillage / déverrouillage 3 de sa position de déverrouillage à sa position de verrouillage, et vice-versa.

Avantageusement, chaque rampe de verrouillage 12A, 12B est prolongée par un moyen de maintien en position 13A, 13B de l'ergot axial correspondant 4B, 5B, ledit moyen de maintien 13A, 13B étant agencé de façon à ce que lorsque l'organe de commande 7 tourne, sous l'action de l'utilisateur, de sa position de verrouillage et décompression (respectivement de verrouillage sensiblement étanche) à sa position de verrouillage sensiblement étanche (respectivement de verrouillage et décompression), l'ergot axial correspondant 4B, 5B et donc le moyen d'entraînement correspondant 4A, 5A sont sensiblement maintenus immobiles dans la position de verrouillage du couvercle.

De manière préférentielle, ledit au moins un moyen de maintien en position 13A, 13B pourra se présenter sous la forme d'un orifice en forme d'arc de cercle 16, 17, ménagé dans l'épaisseur de la plaque 7A, et prolongeant l'orifice oblong 14, 15 correspondant.

Chaque orifice en arc de cercle 16, 17 créant le moyen de maintien 13A, 13B a son centre géométrique confondu avec le centre le centre de rotation de l'organe de commande 7, lequel appartient à l'axe de symétrie général X-X'.

Avantageusement, la soupape de régulation de pression 6 comprend un moyen d'engagement activable 6A qui, lorsqu'il est activé, permet de placer la soupape de régulation 6 en position de fuite, de sorte que ladite soupape est bi-fonctionnelle, puisqu'elle forme ainsi moyen de décompression activable.

Le moyen d'engagement activable 6A peut se présenter sous la forme d'une tige épaulée s'étendant dans la direction axiale, ledit épaulement formant tête d'activation.

Avantageusement, l'organe de commande 7, et plus particulièrement la plaque intermédiaire 7A, comprend une rampe de décompression 18 destinée à coopérer avec le moyen d'engagement 6A, de façon à ce que lorsque l'organe de commande 7 tourne, sous l'action de l'utilisateur, de sa position de verrouillage sensiblement étanche à sa position de verrouillage et décompression, la rampe de décompression engage le moyen d'engagement 6A et le pousse axialement vers le haut, ce qui engendre le déplacement de la soupape de régulation de pression 6 de sa position d'étanchéité à sa position de fuite.

Avantageusement, la rampe de décompression 18 est prolongée par un moyen de maintien en position 19 du moyen d'engagement 6A, ledit moyen de maintien 19 étant agencé de façon à ce que lorsque l'organe de commande 7 tourne, sous l'action de l'utilisateur, de sa position de verrouillage et décompression (respectivement de déverrouillage et décompression) à sa position de déverrouillage et décompression (respectivement de verrouillage et décompression), le moyen d'engagement 6A est maintenu en position activée, ce qui correspond au maintien de la soupape de régulation 6 en position de fuite, c'est-à-dire que le moyen de décompression est activé.

De façon préférentielle, le moyen de maintien en position 19 du moyen d'engagement 6A est constitué par un plan d'appui sensiblement horizontal (c'est-à-dire d'altitude constante) sur lequel est destinée à s'appuyer la tête du moyen d'engagement 6A, ledit plan permettant de maintenir le moyen d'engagement 6A à l'altitude maximum qu'il a atteinte après avoir été soumis à l'action de la rampe de décompression 18.

De plus, la rampe de décompression 18, tout comme le moyen de maintien 19, s'étendent dans le plan horizontal selon un arc de cercle dont le centre est confondu avec le centre de rotation de la plaque intermédiaire 7A. Cela leur permet d'agir uniquement dans la direction axiale sur le moyen d'engagement 6A, sans solliciter ce dernier dans une autre direction, notamment radiale.

De façon préférentielle, le moyen de sécurité à l'ouverture, qui est formé par une tige manométrique 20, et l'organe de commande 7 sont agencés l'un relativement à l'autre de façon à ce que la tige manométrique, lorsqu'elle est en position haute (position de blocage), empêche toute rotation de l'organe de commande 7 de sa position de verrouillage et décompression vers sa position de déverrouillage et décompression.

De manière avantageuse, l'organe de commande 7, et plus particulièrement la plaque 7A, comprend une rampe de démarrage rapide de cuisson 25 formant moyen d'actionnement du moyen de sécurité 20.

Ladite rampe 25 est agencée pour que lorsque l'organe de commande 7 tourne de sa position de verrouillage et décompression à sa position de verrouillage sensiblement étanche, la rampe de démarrage rapide de cuisson 25 engage le moyen de sécurité 20 et l'entraîne, en la poussant, de sa position neutre (position basse) à sa position de blocage (position haute).

On va maintenant s'intéresser plus en détails au montage du moyen de sécurité 20 ainsi qu'à son interaction avec la plaque intermédiaire rotative 7A.

Tel que cela est représenté aux figures 5, 7, 9 et 11, la tige manométrique formant moyen de sécurité 20 est montée dans un puits 31 s'étendant axialement et communiquant de façon étanche avec le perçage 21 ménagé dans le couvercle.

Le puits 31 comporte dans sa partie inférieure un joint d'étanchéité 33, positionné en regard du perçage 21 de façon à créer une communication sensiblement étanche entre l'intérieur de la cuve et l'intérieur du puits 31.

La tige manométrique 20 est quant à elle de forme longiligne et s'étend axialement entre une extrémité supérieure et une extrémité inférieure. La tige 20 présente au niveau de son extrémité supérieure, un premier épaulement principal supérieur 34 dont la face inférieure est destinée à coopérer avec la rampe de démarrage rapide de cuisson 25.

La tige manométrique 20 présente également un deuxième épaulement principal 35 réalisé de préférence sensiblement au milieu de la tige 20.

La face inférieure de ce deuxième épaulement principal 35 est prévue pour servir de surface d'appui relativement au joint 33, de telle sorte que la position neutre, dans laquelle la tige 20 repose sur le joint inférieur 33, présente un caractère étanche.

La tige manométrique présente également un troisième épaulement principal, réalisé au niveau de son extrémité inférieure. La face supérieure de ce troisième épaulement principal est prévue pour venir en appui contre le joint 33, sous ce dernier, lorsque la tige est en position haute de blocage. De cette façon, la position de blocage présente un caractère étanche.

La rampe de démarrage rapide de cuisson 25 est quant à elle issue d'une ailette 30 solidaire de la plaque 7A.

L'ailette 30 s'étend sensiblement de façon plane radialement dans la direction centrifuge. Tel que cela est notamment visible aux figures 3 et 4, l'ailette 30 comprend d'une part un rebord 22 destiné à venir en butée contre le premier épaulement principal 34 lorsque la tige est en position haute, et d'autre part la rampe de démarrage rapide de cuisson 25, laquelle s'étend sensiblement en oblique par rapport à l'horizontale.

On va maintenant décrire le fonctionnement de l'appareil de cuisson conforme à l'invention.

En premier lieu, l'utilisateur place des aliments dans la cuve 1, c'est-à-dire directement dans celle-ci ou indirectement par l'intermédiaire d'un panier amovible contenu dans la cuve 1.

L'utilisateur rapporte ensuite le couvercle 2 sur la cuve 1, tel que cela est illustré aux figures 11 et 12. A cet instant, l'organe de commande 7 est en position de déverrouillage et décompression. Cette position de l'organe de commande 7 correspond à une position de déverrouillage des mâchoires 4, 5, le moyen de décompression étant activé (c'est-à-dire que la tête 6A repose sur le plan horizontal d'appui 19).

La tige de sécurité 20 est quant à elle en position neutre.

Quant au rebord 22, il surplombe la tige 20, l'empêchant ainsi de rejoindre sa position de blocage. Cette disposition permet d'ailleurs de maintenir sensiblement la tige 20 dans sa position étanche neutre, ce qui s'avère intéressant si l'appareil de cuisson est utilisé à la manière d'un faitout classique, puisque le rebord 22 empêche la tige 20 de monter, évitant ainsi les fuites de vapeur vers l'extérieur.

L'utilisateur procède ensuite au verrouillage étanche du couvercle 2 sur la cuve 1, en tournant la poignée 7B dans le sens horaire selon une première course prédéterminée, jusqu'à atteindre une position de butée correspondant à la position de verrouillage sensiblement étanche de l'appareil. En passant de sa position de déverrouillage et décompression à sa position de verrouillage étanche, l'organe de commande est d'ailleurs également passé, mais sans s'y arrêter, par la position de verrouillage et décompression.

Lors du passage de la position de déverrouillage et décompression à la position de verrouillage sensiblement étanche, la rampe de démarrage rapide de cuisson 25 vient soulever la tige 20 pour venir la plaquer en position de blocage.

Le passage de la position de déverrouillage et décompression à la position de verrouillage sensiblement étanche a permis également de désactiver le moyen de décompression, c'est-à-dire que la tête 6A se trouve désormais au pied de la rampe de décompression 18.

L'appareil de cuisson peut alors monter en pression jusqu'à atteindre sa pression de fonctionnement, laquelle est régulée par la soupape de régulation 6, qui ne joue plus désormais le rôle de moyen de décompression.

L'utilisateur peut ensuite à tout moment tourner la poignée 7B dans le sens anti-horaire selon une deuxième course prédéterminée, ce qui aura pour conséquence, par l'intermédiaire de la rampe de décompression 18, de soulever la tête 6A et d'engendrer ainsi une fuite de vapeur provoquant une décompression de l'enceinte.

En revanche, la position radiale des ergots 4B, 5B ne varie pas lors de ce passage de la position de verrouillage sensiblement étanche à la position de verrouillage et décompression.

Tel que cela est représenté aux figures 7 et 8, la tige manométrique 20, qui n'est, à ce stade (en position de verrouillage et décompression), plus soutenue par la rampe 25, reste cependant en position haute tant que la pression régnant à l'intérieur de l'enceinte excède sensiblement la pression de descente, égale par exemple à 2,5 kPa.

En position haute, la tige manométrique 20 coopère avec le rebord 22, de façon à empêcher l'utilisateur de continuer à tourner la poignée 7B dans le sens anti-horaire pour réaliser le déverrouillage du couvercle 2 relativement à la cuve 1.

Puis, lorsque la pression à l'intérieur de l'enceinte a atteint ou est retombée en deçà de la pression de descente, la tige manométrique 20 retourne automatiquement, sous l'effet de son poids, vers sa position neutre (cf. figures 9 et 10).

L'utilisateur est ainsi en mesure, en imprimant un mouvement supplémentaire de rotation anti-horaire à la poignée 7B, d'atteindre la position de déverrouillage et décompression, qui lui permet d'ôter le couvercle de la cuve.

## Revendications

1. Appareil domestique de cuisson d'aliments sous pression comprenant :
- une cuve (1) et un couvercle (2) destiné à être rapporté et verrouillé sur ladite cuve (1) pour former une enceinte de cuisson étanche,
- un moyen de sécurité à l'ouverture (20) susceptible d'évoluer entre une position neutre, dans laquelle il autorise le déverrouillage du couvercle (2), et une position de blocage, dans laquelle il interdit le déverrouillage du couvercle (2), ledit moyen de sécurité (20) étant conçu pour se trouver en position de blocage lorsque la pression régnant dans l'enceinte est supérieure ou égale à une valeur prédéterminée dite pression de montée, et/ou lorsque la température régnant dans l'enceinte est supérieure ou égale à une valeur prédéterminée dite température de montée,
**caractérisé en ce que** l'appareil comprend un moyen d'actionnement (25) du moyen de sécurité (20), agencé pour permettre de placer le moyen de sécurité (20) en position de blocage quel que soit le niveau de pression régnant dans l'enceinte de cuisson.

2. Appareil selon la revendication 1 **caractérisé en ce que** le moyen d'actionnement (25) est agencé pour coopérer par contact mécanique avec le moyen de sécurité (20).

3. Appareil selon la revendication 1 **caractérisé en ce que** le moyen de sécurité à l'ouverture (20) est sensible à la pression régnant dans l'enceinte.

4. Appareil selon la revendication 3 **caractérisé en ce que** la pression de montée est comprise entre sensiblement 1,5 et 4 kPa.

5. Appareil selon la revendication 4 **caractérisé en ce que** la pression de montée est sensiblement égale à 3 kPa ± 0,5 kPa.

6. Appareil selon l'une des revendications 3 à 5 **caractérisé en ce que** le moyen de sécurité (20) est conçu pour avoir tendance à évoluer vers sa position neutre lorsque la pression à l'intérieur de l'enceinte atteint une valeur relative, dite pression de descente, comprise entre sensiblement 1,5 et 4 kPa.

7. Appareil selon la revendication 6 **caractérisé en ce que** la pression de descente est sensiblement égale à 2,5 kPa ± 0,5 Kpa.

8. Appareil selon l'une des revendications 3 à 7 **caractérisé en ce que** le moyen de sécurité (20) comprend une tige manométrique montée mobile entre une position basse de rappel formant position neutre, et une position haute formant position de blocage.

9. Appareil selon l'une des revendications 1 à 8 **caractérisé en ce qu**'il comprend un moyen de verrouillage / déverrouillage (3) susceptible d'évoluer entre une position de verrouillage du couvercle (2) relativement à la cuve (1) et une position de déverrouillage.

10. Appareil selon la revendication 9 **caractérisé en ce que** le moyen de sécurité (20) est conçu pour interagir avec le moyen de verrouillage / déverrouillage (3) de façon à interdire le passage du moyen de verrouillage / déverrouillage (3) de sa position de verrouillage à sa position de déverrouillage lorsque ledit moyen de sécurité (20) est en position de blocage.

11. Appareil selon l'une des revendications 1 à 10 **caractérisé en ce qu**'il comprend un moyen de décompression (6) de l'enceinte activable / désactivable, ledit moyen de décompression (6) étant agencé pour autoriser, lorsqu'il est activé, une chute de la pression régnant dans l'enceinte.

12. Appareil selon les revendications 9 et 11 **caractérisé en ce que** lesdits moyen d'actionnement (25), moyen de verrouillage / déverrouillage (3) et moyen de décompression (6) coopèrent de façon à ce que lorsque le moyen de verrouillage / déverrouillage (3) est en position de verrouillage, le passage du moyen de décompression (6) de sa position activée à sa position désactivée entraîne le moyen de sécurité (20) dans sa position de blocage.

13. Appareil selon la revendication 12 **caractérisé en ce que** lesdits moyen d'actionnement (25), moyen de verrouillage / déverrouillage (3) et moyen de décompression (6) coopèrent de façon à ce que lorsque le moyen de verrouillage / déverrouillage (3) est en position de verrouillage et que le moyen de décompression est activé, le moyen d'actionnement (25) autorise le moyen de sécurité (20) à évoluer vers sa position neutre si la pression à l'intérieur de l'enceinte le permet.

14. Appareil selon l'une des revendications 1 à 13 **caractérisé en ce que** le moyen de sécurité (20) ferme de façon sensiblement étanche la communication de l'enceinte avec l'extérieur lorsqu'il est en position neutre.

15. Appareil selon l'une des revendications 1 à 14 **caractérisé en ce que** le moyen de sécurité (20) ferme de façon sensiblement étanche la communication de l'enceinte avec l'extérieur lorsqu'il est en position de blocage.

16. Appareil selon l'une des revendications précédentes lorsqu'elles incluent l'objet des revendications 9 et 11 **caractérisé en ce que** lesdits moyens de verrouillage / déverrouillage (3) et moyen de décompression (6) sont chacun reliés fonctionnellement à un organe de commande unique et commun (7, 7A), ledit organe de commande (7, 7A) étant conçu pour être susceptible de se trouver dans une position prédéterminée de verrouillage et décompression, dans laquelle ledit organe de commande (7, 7A) coopère avec le moyen de verrouillage / déverrouillage (3) et le moyen de décompression (6) de façon à ce que le moyen de verrouillage / déverrouillage (3) se trouve dans sa position de verrouillage, tandis que le moyen de décompression (6) est activé.

17. Appareil selon la revendication 16 **caractérisé en ce que** l'organe de commande (7, 7A) est conçu pour être susceptible de se trouver dans une position de déverrouillage et décompression, dans laquelle ledit organe de commande (7, 7A) coopère avec le moyen de verrouillage / déverrouillage (3) et le moyen de décompression (6) de façon à ce que le moyen de verrouillage / déverrouillage (3) se trouve dans sa position de déverrouillage, tandis que le moyen de décompression (6) est activé.

18. Appareil selon l'une des revendications 16 ou 17 **caractérisé en ce que** l'organe de commande (7, 7A) est conçu pour être susceptible de se trouver dans une position de verrouillage sensiblement étanche, dans laquelle ledit organe de commande (7, 7A) coopère avec le moyen de verrouillage / déverrouillage (3) et le moyen de décompression (6) de façon à ce que le moyen de verrouillage / déverrouillage (3) se trouve dans sa position de verrouillage, tandis que le moyen de décompression (6) est désactivé.

19. Appareil selon l'une des revendications 16 à 18 **caractérisé en ce que** le moyen de verrouillage / déverrouillage (3) comprend au moins un élément de verrouillage (4, 5) du couvercle (2) relativement à la cuve (1), ledit au moins un élément (4, 5) étant monté mobile en translation radiale relativement au couvercle, par l'intermédiaire d'un moyen d'entraînement correspondant (4A, 5A), entre la position de verrouillage et la position de déverrouillage.

20. Appareil selon la revendication 19 **caractérisé en ce que** l'organe de commande (7, 7A) est monté en rotation relativement au couvercle (2) et est relié fonctionnellement au moyen d'entraînement (4A, 5A), de façon à régir le déplacement de ce dernier.

21. Appareil selon la revendication 20 **caractérisé en ce que** le moyen de sécurité (20) et l'organe de commande (7, 7A) sont agencés l'un relativement à l'autre de façon à ce que le moyen de sécurité (20), lorsqu'il est en position de blocage, empêche toute rotation de l'organe de commande (7, 7A) de sa position de verrouillage et décompression vers sa position de déverrouillage et décompression.

22. Appareil selon la revendication 18 et selon la revendication 20 ou 21 **caractérisé en ce que** l'organe de commande (7, 7A) comprend une rampe de démarrage rapide de cuisson (25) formant moyen d'actionnement du moyen de sécurité (20), ladite rampe (25) étant agencée pour que lorsque l'organe de commande (7, 7A) tourne de sa position de verrouillage et décompression à sa position de verrouillage sensiblement étanche, la rampe de démarrage rapide de cuisson (25) engage le moyen de sécurité (20) et l'entraîne de sa position neutre à sa position de blocage.

23. Appareil selon l'une des revendications 1 à 22 **caractérisé en ce qu**'il est constitué par un autocuiseur.

## Claims

1. Domestic appliance for cooking food under pressure comprising:
- a container (1) and a lid (2) intended to be fitted and locked on said container (1) in order to form a sealed cooking vessel;
- a means for safety upon opening (20) capable of changing between a neutral position, in which it permits the unlocking of the lid (2), and a disabling position, in which it prevents the unlocking of the lid (2), said safety means (20) being designed to be in the disabling position when the pressure prevailing in the vessel is greater than or equal to a predetermined value referred to as the rising pressure, and/or when the temperature prevailing in the vessel is greater than or equal to a predetermined value referred to as the rising temperature;
**characterised in that** the appliance comprises a means (25) of activating the safety means (20), arranged to make it possible to place the safety means (20) in the disabling position irrespective of the level of pressure prevailing in the cooking vessel.

2. Appliance according to Claim 1, **characterised in that** the activation means (25) is arranged to cooperate by mechanical contact with the safety means (20).

3. Appliance according to Claim 1, **characterised in that** the means for safety upon opening (20) is sensitive to the pressure prevailing in the vessel.

4. Appliance according to Claim 3, **characterised in that** the rising pressure lies between substantially 1.5 and 4 kPa.

5. Appliance according to Claim 4, **characterised in that** the rising pressure is substantially equal to 3 kPa ± 0.5 kPa.

6. Appliance according to one of Claims 3 to 5, **characterised in that** the safety means (20) is designed to have a tendency to change to its neutral position when the pressure inside the vessel reaches a relative value, referred to as the falling pressure, lying between substantially 1.5 and 4 kPa.

7. Appliance according to Claim 6, **characterised in that** the falling pressure is substantially equal to 2.5 kPa ± 0.5 kPa.

8. Appliance according to one of Claims 3 to 7, **characterised in that** the safety means (20) comprises a manometric rod mounted to be able to move between a low return position forming a neutral position, and a high position forming a disabling position.

9. Appliance according to one of Claims 1 to 8, **characterised in that** it comprises a locking/unlocking means (3) capable of changing between a position of locking the lid (2) in relation to the container (1) and an unlocking position.

10. Appliance according to Claim 9, **characterised in that** the safety means (20) is designed to interact with the locking/unlocking means (3) so as to prevent the locking/unlocking means (3) going from its locking position to its unlocking position when said safety means (20) is in the disabling position.

11. Appliance according to one of Claims 1 to 10, **characterised in that** it comprises a means (6) of decompressing the vessel which can be activated/deactivated, said decompression means (6) being arranged to permit, when it is activated, a drop in the pressure prevailing in the vessel.

12. Appliance according to Claims 9 and 11, **characterised in that** said activation means (25), locking/unlocking means (3) and decompression means (6) cooperate so that, when the locking/unlocking means (3) is in the locking position, the decompression means (6) in going from its activated position to its deactivated position drives the safety means (20) to its disabling position.

13. Appliance according to Claim 12, **characterised in that** said activation means (25), locking/unlocking means (3) and decompression means (6) cooperate so that, when the locking/unlocking means (3) is in the locking position and the decompression means is activated, the activation means (25) permits the safety means (20) to change to its neutral position if the pressure inside the vessel so allows.

14. Appliance according to one of Claims 1 to 13, **characterised in that** the safety means (20) closes, in a substantially sealed manner, the communication of the vessel with the outside when it is in the neutral position.

15. Appliance according to one of Claims 1 to 14, **characterised in that** the safety means (20) closes, in a substantially sealed manner, the communication of the vessel with the outside when it is in the disabling position.

16. Appliance according to one of the preceding claims when they include the object of Claims 9 and 11, **characterised in that** said locking/unlocking means (3) and decompression means (6) are each functionally connected to a single common control member (7, 7A), said control member (7, 7A) being designed to be capable of being in a predetermined locking and decompression position, in which said control member (7, 7A) cooperates with the locking/unlocking means (3) and the decompression means (6) so that the locking/unlocking means (3) is in its locking position, whilst the decompression means (6) is activated.

17. Appliance according to Claim 16, **characterised in that** the control member (7, 7A) is designed to be capable of being in an unlocking and decompression position, in which said control member (7, 7A) cooperates with the locking/unlocking means (3) and the decompression means (6) so that the locking/unlocking means (3) is in its unlocking position, whilst the decompression means (6) is activated.

18. Appliance according to one of Claims 16 or 17, **characterised in that** the control member (7, 7A) is designed to be capable of being in a substantially sealed locking position, in which said control member (7, 7A) cooperates with the locking/unlocking means (3) and the decompression means (6) so that the locking/unlocking means (3) is in its locking position, whilst the decompression means (6) is deactivated.

19. Appliance according to one of Claims 16 to 18, **characterised in that** the locking/unlocking means (3) comprises at least one element (4, 5) for locking the lid (2) in relation to the container (1), said at least one element (4, 5) being mounted to be able to move in radial translation in relation to the lid, by means of a corresponding driving means (4A, 5A), between the locking position and the unlocking position.

20. Appliance according to Claim 19, **characterised in that** the control member (7, 7A) is mounted rotationally in relation to the lid (2) and is functionally connected to the driving means (4A, 5A), so as to govern the movement of the latter.

21. Appliance according to Claim 20, **characterised in that** the safety means (20) and the control member (7, 7A) are arranged in relation to one another so that the safety means (20), when it is in the disabling position, prevents any rotation of the control member (7, 7A) from its locking and decompression position to its unlocking and decompression position.

22. Appliance according to Claim 18 and according to Claim 20 or 21, **characterised in that** the control member (7, 7A) comprises a quick start of cooking guide track (25) forming a means of activating the safety means (20), said guide track (25) being arranged so that, when the control member (7, 7A) turns from its locking and decompression position to its substantially sealed locking position, the quick start of cooking guide track (25) engages the safety means (20) and drives it from its neutral position to its disabling position.

23. Appliance according to one of Claims 1 to 22, **characterised in that** it is constituted by a pressure cooker.

## Patentansprüche

1. Haushaltsdruckgargerät für Nahrungsmittel, umfassend:
- einen Behälter (1) und einen Deckel (2), der dazu bestimmt ist, auf dem Behälter (1) aufgesetzt und verriegelt zu werden, um einen dichten Garraum zu bilden,
- ein Sicherungsmittel beim Öffnen (20), das sich zwischen einer neutralen Position, in der es das Entriegeln des Deckels (2) erlaubt, und einer Blockierposition, in der es das Entriegeln des Deckels (2) untersagt, bewegen kann, wobei das Sicherungsmittel (20) derart ausgebildet ist, dass es sich in Blockierposition befindet, wenn der Druck, der in dem Raum herrscht, größer oder gleich einem vorbestimmten Wert, Anstiegsdruck genannt, ist, und/oder wenn die Temperatur, die in dem Raum herrscht, größer oder gleich einem vorbestimmten Wert, Anstiegstemperatur genannt, ist,
**dadurch gekennzeichnet, dass** das Gerät ein Betätigungsmittel (25) des Sicherungsmittels (20) aufweist, das eingerichtet ist, um es zu erlauben, das Sicherungsmittel (20) ungeachtet des Druckniveaus, das in dem Garraum herrscht, auf Blockierposition zu stellen.

2. Gerät nach Anspruch 1, **dadurch gekennzeichnet, dass** das Betätigungsmittel (25) eingerichtet ist, um durch mechanische Berührung mit dem Sicherungsmittel (20) zusammenzuwirken.

3. Gerät nach Anspruch 1, **dadurch gekennzeichnet, dass** das Sicherungsmittel beim Öffnen (20) auf den Druck, der in dem Raum herrscht, empfindlich reagiert.

4. Gerät nach Anspruch 3, **dadurch gekennzeichnet, dass** der Anstiegsdruck zwischen etwa 1,5 und 4 kPa liegt.

5. Gerät nach Anspruch 4, **dadurch gekennzeichnet, dass** der Anstiegsdruck etwa gleich 3 kPa ± 0,5 kPa ist.

6. Gerät nach einem der Ansprüche 3 bis 5, **dadurch gekennzeichnet, dass** das Sicherungsmittel (20) derart ausgebildet ist, dass es zum Übergehen auf seine neutrale Position tendiert, wenn der Druck im Inneren des Raumes einen relativen Wert, Senkdruck genannt, der zwischen etwa 1,5 und 4 kPa liegt, erreicht.

7. Gerät nach Anspruch 6, **dadurch gekennzeichnet, dass** der Senkdruck etwa gleich 2,5 kPa ± 0,5 kPa ist.

8. Gerät nach einem der Ansprüche 3 bis 7, **dadurch gekennzeichnet, dass** das Sicherungsmittel (20) einen Manometerstange aufweist, die zwischen einer Rückholtiefposition, die die neutrale Position bildet, und einer Hochstellung, die die Blockierposition bildet, beweglich ist.

9. Gerät nach einem der Ansprüche 1 bis 8, **dadurch gekennzeichnet, dass** es ein Verriegelungs-/Entriegelungsmittel (3) aufweist, das sich zwischen einer Verriegelungsposition des Deckels (2) in Bezug zum Behälter (1) und einer Entriegelungsposition bewegen kann.

10. Gerät nach Anspruch 9, **dadurch gekennzeichnet, dass** das Sicherungsmittel (20) derart ausgebildet ist, dass es mit dem Verriegelungs-/Entriegelungsmittel (3) so zusammenwirkt, dass es den Durchgang des verriegelungs-/Entriegelungsmittels (3) von seiner Verriegelungsposition zu seiner Entriegelungsposition verhindert, wenn das Sicherungsmittel (20) in Blockierposition ist.

11. Gerät nach einem der Ansprüche 1 bis 10, **dadurch gekennzeichnet, dass** es ein aktivierbares/deaktivierbarcs Druckminderungsmittel (6) für den Raum aufweist, wobei das Druckminderungsmittel (6) eingerichtet ist, um, wenn es aktiviert wird, einen Abfall des Drucks, der in dem Raum herrscht, zu gestatten.

12. Gerät nach einem der Ansprüche 9 bis 11, **dadurch gekennzeichnet, dass** die Betätigungsmittel (25), Verriegelungs-/Entriegelungsmittel (3) und das Druckminderungsmittel (6) so zusammenwirken, dass, wenn sich das Verriegelungs-/Entriegelungsmittel. (3) in Verriegelungsposition befindet, der Durchgang des Druckminderungsmittels (6) von seiner aktivierten Position zu seiner deaktivierten Position das Sicherungsmittel (20) in seine Blockierposition mitnimmt.

13. Gerät nach Anspruch 12, **dadurch gekennzeichnet, dass** die Betätigungsmittel (25), das Verriegelungs-/Entriegelungsmittel (3) und das Druckminderungsmittel (6) so zusammenwirken, dass das Betätigungsmittel (25), wenn das Verriegelungs-/Entricgelungsmittel (3) in Verriegelungsposition ist und das Druckminderungsmittel aktiviert ist, dem Sicherungsmittel (20) erlaubt, sich zu seiner neutralen Position zu bewegen, wenn es der Innendruck des Raumes erlaubt.

14. Gerät nach einem der Ansprüche 1 bis 13, **dadurch gekennzeichnet, dass** das Sicherungsmittel (20) die Verbindung des Raumes mit der Außenseite im Wesentlichen dicht verschließt, wenn es in neutraler Position ist.

15. Gerät nach einem der Ansprüche 1 bis 14, **dadurch gekennzeichnet, dass** das Sicherungsmittel (20) die Verbindung des Raumes mit der Außenseite im Wesentlichen dicht verschließt, wenn es in Blockierposition ist.

16. Gerät nach einem der vorhergehenden Ansprüche, wenn sie den Gegenstand der Ansprüche 9 und 11 enthalten, **dadurch gekennzeichnet, dass** die Verriegelungs-/Entriegelungsmittel (3) und das Druckminderungsmittel (6) jeweils funktional mit einem einzigen und gemeinsamen Steuerelement (7, 7A) verbunden sind, wobei das Steuerelement (7,7A) derart ausgebildet ist, dass es sich in einer vorbestimmten Verriegelungs- und Druckminderungsposition befinden kann, in der das Steuerelement (7, 7A) mit dem Verriegelungs-/Entriegelungsmittel (3) und dem Druckminderungsmittel (6) so zusammenwirkt, dass sich das Verriegelungs-/Entriegelungsmittel (3) in seiner Verriegelungsposition befindet, während das Druckminderungsmittel (6) aktiviert ist.

17. Gerät nach Anspruch 16, **dadurch gekennzeichnet, dass** das Steuerelement (7, 7A) derart ausgebildet ist, dass es sich in einer Verriegelungs- und Druckminderungsposition befinden kann, in der das Steuerelement (7, 7A) mit dem Verriegelungs-/Entriegelungsmittel (3) und dem Druckminderungsmittel (6) so zusammenwirkt, dass sich das Verriegelungs-/Entriegelungsmittel (3) in seiner Entriegelungsposition befindet, während das Druckminderungsmittel (6) aktiviert ist.

18. Gerät nach einem der Ansprüche 16 oder 17, **dadurch gekennzeichnet, dass** das Steuerelement (7, 7A) derart ausgebildet ist, dass es sich in einer im Wesentlichen dichten Verriegelungsposition befinden kann, in der das Steuerelement (7, 7A) mit dem Verriegelungs-/Entriegelungsmittel (3) und dem Druckminderungsmittel (6) so zusammenwirkt, dass sich das Verriegelungs-/Entriegelungsmittel (3) in seiner Verriegelungsposition befindet, während das Druckminderungsmittel (6) deaktiviert ist.

19. Gerät nach einem der Ansprüche 16 bis 18, **dadurch gekennzeichnet, dass** das Verriegelungs-/Entriegelungsmittel (3) mindestens ein Verriegelungselement (4, 5) für den Deckel (2) in Bezug zum Behälter (1) aufweist, wobei das mindestens eine Element (4, 5) in radialer Translation in Bezug zum Deckel mit Hilfe eines entsprechenden Mitführungsmittels (4A, 5A) zwischen der Verriegelungsposition und der Entriegelungsposition beweglich montiert ist.

20. Gerät nach Anspruch 19, **dadurch gekennzeichnet, dass** das Steuerelement (7, 7A) drehbar in Bezug zum Deckel (2) angeordnet ist und funktional mit dem Mitführungsmittel (4A, 5A) so verbunden ist, dass es die Verschiebung dieses Letzteren steuert.

21. Gerät nach Anspruch 20, **dadurch gekennzeichnet, dass** das Sicherungsmittel (20) und das Steuerelement (7, 7A) zueinander so angeordnet sind, dass das Sicherungsmittel (20), wenn es in seiner Blockierposition ist, jede Drehung des Steuerelements (7, 7A) von seiner Verriegelungs- und Druckminderungsposition zu seiner Entriegelungs- und Druckminderungsposition verhindert.

22. Gerät nach Anspruch 18 und nach Anspruch 20 oder 21, **dadurch gekennzeichnet, dass** das Steuerelement (7, 7A) eine Kochschnellstartrampe (25) aufweist, die ein Betätigungsmittel des Sicherungsmittels (20) bildet, wobei die Rampe (25) eingerichtet ist, so dass, wenn das Steuerelement (7, 7A) von seiner verriegelungs- und Druckminderungsposition zu seiner im Westntlichen dichten Verriegelungsposition dreht, die Kochschnellstartrampe (25) in das Sicherungsmittel (20) eingreift und es von seiner neutralen Position auf seine Blockierposition mitnimmt.

23. Gerät nach einem der Ansprüche 1 bis 22, **dadurch gekennzeichnet, dass** es von einem Druckkochtopf gebildet ist.
